# FASCICULE DE BREVET EUROPEEN

(11) **EP 1 392 572 B1**
(45) Date de publication et mention de la délivrance du brevet: **16.09.2009**
(21) Numéro de dépôt: 02751238.3
(22) Date de dépôt: 22.05.2002
(51) Int. Cl.: B65D 30/08

(54) **POCHE SOUPLE D'EMBALLAGE POUR LIQUIDE ALIMENTAIRE**
FLEXIBLER VERPACKUNGSBEUTEL FÜR FLÜSSIGE LEBENSMITTELPRODUKTE
SOFT PACKAGING BAG FOR LIQUID FOOD

(30) Priorité: 23.05.2001 FR 0106845
(43) Date de publication de la demande: 03.03.2004
(73) Titulaire: Amcor Flexibles France, 16300 Barbezieux St Hilaire (FR)
(72) Inventeur: BISCHOFF, Rémy, F-16130 Salles D'Angles (FR)
(74) Mandataire: Blot, Philippe Robert Emile
(86) Numéro de dépôt international: PCT/FR2002/001729
(87) Numéro de publication internationale: WO 2002/094669

(56) Documents cités:
- EP-A- 0 464 921
- EP-A- 0 947 543
- FR-A- 1 295 800
- GB-A- 1 454 488
- US-A- 4 810 844
- US-A- 4 937 410

## Description

La présente invention concerne une poche souple d'emballage pour un liquide alimentaire, notamment une eau minérale.

L'eau minérale, ou d'autres types de boisson, sont couramment conditionnés dans des bouteilles ou des cannettes rigides.

Il a été envisagé de conditionner l'eau minérale dans des poches souples réalisées à partir d'une ou plusieurs feuilles souples de polymère. Toutefois, ce type de conditionnement n'est pas utilisé en pratique du fait de la contamination olfactive et gustative de l'eau contenue dans la poche par le matériau constituant la feuille d'emballage.

En effet, l'eau minérale est très sensible aux contaminations, lesquelles contaminations sont très facilement détectées par le buveur.

Ce phénomène de contamination de l'eau se trouve accentué lors de la formation de la poche par soudage.

US 4,810, 844, GB 1,454, 488 et US 4,937 410 décrivent l'utilisation du co-polyester dans un emballage pour faciliter son scellage à chaud.

L'invention a pour but de proposer une poche souple d'emballage permettant de conditionner un produit liquide alimentaire, sans risque de dégradation des qualités gustatives ou olfactives du liquide conditionné.

A cet effet, l'invention a pour objet une utilisation selon la revendication 1.

Suivant des modes particulier de réalisation, l'utilisation dépendantes comporte l'une ou plusieurs des caractéristiques des revendications.

L'invention sera mieux comprise à la lecture de la description qui va suivre, donnée uniquement à titre d'exemple et faite en se référant aux dessins sur lesquels :
- la figure 1 est une vue en élévation d'une poche souple selon l'invention ; et
- les figures 2 et 3 sont des vues en section de feuilles souples utilisables dans l'emballage souple de la figure 1.

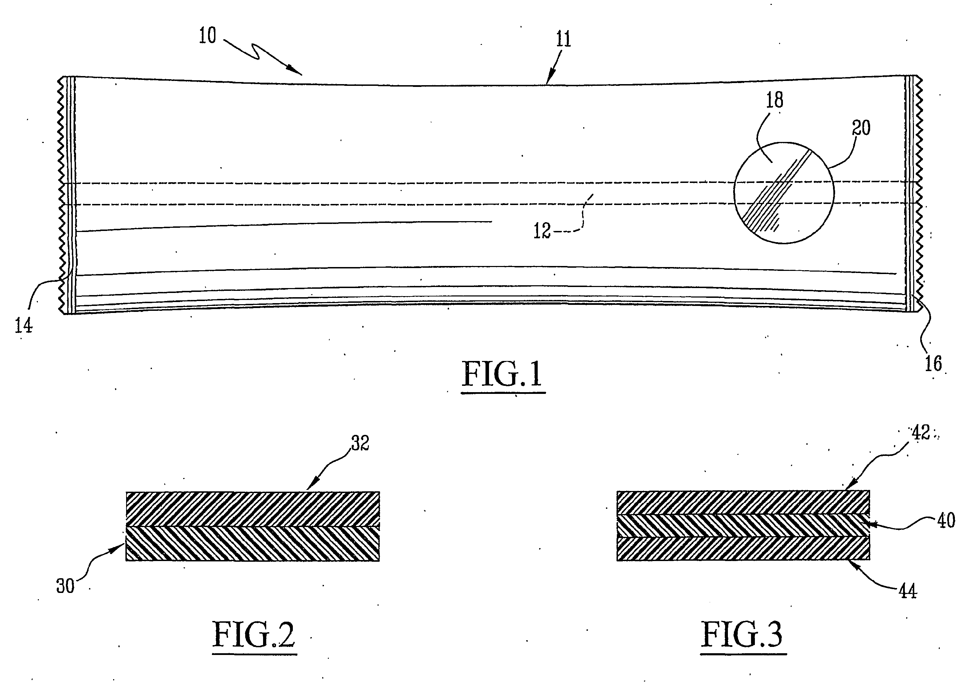

La poche 10 représentée sur la figure 1 est de forme générale tubulaire.

Elle est formée à partir d'une feuille de polymère 11 dont les bords longitudinaux sont thermosoudés l'un sur l'autre suivant une soudure longitudinale 12. La soudure longitudinale est une soudure de type cuir contre chair, c'est-à-dire effectuée par mise en contact, des faces opposées de la feuille.

A chacune de ses extrémités, la poche 10 est obturée par des soudures transversales 14, 16.

Sur sa face principale dépourvue de soudure 12, la poche 10 présente un goulot 18 sur lequel est vissé un bouchon d'obturation amovible 20.

Une telle poche est utilisable notamment pour conditionner de l'eau minérale, ou d'autres boissons telles que du thé, du café, des jus de fruit ou des alcools.

La feuille 11 est une feuille simple ou stratifié ne comportant pas en son coeur un adhésif permanent, encore appelé adhésif repositionnable. Plus précisément, la feuille 11 ne comporte pas deux couches de polymères entre lesquelles est interposée une couche d'un adhésif permanent tel que du hot melt. Une telle feuille permet notamment une ouverture et une refer-meture de l'emballage la comportant par séparation temporaire des deux couches au niveau de l'adhésif permanent et resolidarisation ultérieure des deux couches par l'effet de l'action permanente de l'adhésif.

Au contraire, la feuille 11 utilisée dans la poche selon l'invention est une feuille dont les couches la constituant sont solidarisées de manière définitive sans qu'il soit possible de les séparer et de les resolidariser ultérieurement.

Selon l'invention, la feuille 11 utilisée pour former la poche comporte, suivant sa surface intérieure, c'est-à-dire sa surface en contact avec le liquide conditionné, une couche d'un co-polyester.

Ce co-polyester est de préférence essentiellement amorphe, c'est-à-dire qu'il a une structure amorphe pour au moins 80 % de sa masse moléculaire en poids.

Le co-polyester est de préférence choisi pour être thermosoudable afin d'assurer la formation de la poche. Il est avantageusement choisi thermosoudable à une température inférieure à 120°C.

Les essais ont montré que l'utilisation d'une feuille, notamment stratifiée, dont la couche en contact avec le liquide est constituée d'un co-polyester amorphe, permet de stocker le liquide sans que celui-ci ne soit dégradé d'un point de vue olfactif ou gustatif par des odeurs ou goûts provenant de la feuille.

Avantageusement, le co-polyester amorphe utilisé est de type PETG ou PCTG.

Le co-polyester amorphe de type PETG est un polyester amorphe obtenu à partir d'acide terephatalique et d'un mélange à pré-éminence d'éthylène glycole avec, dans une moindre quantité en mole du 1,4-cyclohexane-dimethanol.

Le polyester amorphe de type PCTG est un polyester amorphe obtenu à partir d'acide terephtalique et d'un mélange à pré-éminence de 1,4-cyclohexanedimethanol avec, dans une moindre quantité en mole de l'éthylène glycole.

Suivant un premier mode de réalisation, la feuille 11 est constituée uniquement d'un co-polyester amorphe soudable.

L'épaisseur totale de la feuille 11 est comprise entre 15 µm et 70 µm et de préférence entre 15 µm et 50 µm.

Une autre variante du film 11 est illustrée sur la figure 2. Ce film est constitué de deux couches contrecollées l'une sur l'autre. Ce film comporte une couche support 30 constituée d'une couche d'un matériau polymère tel que du polyéthylène. Il comporte en outre une couche 32 d'un co-polyester amorphe, cette couche étant destinée à constituer la surface intérieure de la poche 10 et à être en contact avec le liquide conditionné.

Les couches 30 et 32 sont maintenues ensemble par exemple par collage définitif non repositionnable sur toute leur surface.

L'épaisseur de la couche de polyéthylène est par exemple comprise entre 20 µm et 70 µm. La couche de co-polyester amorphe 32 a une épaisseur comprise entre 15 µm et 70 µm et de préférence entre 15 µm et 50 µm.

Les co-polymères amorphes formant la couche 32 sont avantageusement du PETG ou du PCTG.

Sur la figure 3 est représentée encore une variante de réalisation d'un film 11 pouvant être utitisé pour la poche 10 de la figure 1.

Ce film est obtenu par co-extrusion.

Il comporte une couche centrale 40 due polyéthylène recouverte sur chacune de ses faces par des couches 42, 44 de co-polyester amorphe, constitué avantageusement de PETG ou de PCTG. L'épaisseur de la couche de polyéthylène 40 est avantageusement comprise entre 20 µm et 40 µm, l'épaisseur des couches 42 et 44 étant comprise entre 5 µm et 40 µm et de préférence sensiblement égale à 10 µm.

Suivant encore une autre variante de réalisation, la poche 10 est réalisée à partir d'une feuille co-extrudée comportant seulement une couche de co-polyester amorphe disposée sur une unique face de la couche de polyéthylène.

On constate que le co-polyester amorphe et en particulier le PETG et le PCTG constitue une barrière aux migrations moléculaires évitant la migration de solvant résiduel, d'encre ou de tout autre élément contenu dans la feuille vers le liquide contenu dans la poche.

Une telle poche de conditionnement convient bien en particulier pour des eaux minérales ou des jus de fruit.

L'invention s'applique plus généralement à tout type de poche souple propre à contenir un liquide, quels que soient la forme de la poche et son nombre de soudures.

En variante, le co-polyester utilisé pour la surface tournée vers l'intérieur de la poche est un polyester obtenu à partir d'un ou plusieurs diacides carboxyliques ou diesters correspondants et d'un ou plusieurs diols.

Les diacides carboxyliques peuvent être par exemple :
- acide téréphtalique
- acide isophtalique
- acide naphtalènedicarboxylique ; et
- acide cyclohexanedicarboxylique.

Les diols peuvent être par exemple :
- éthylène glycole
- diéthylène glycole
- cyclohexanedimethanaol
- diméthyle propanediol
- butylène glycole ; et
- polyéthylène glycole.

De préférence, et afin d'obtenir une cristallinité du co-polyester aussi réduite que possible, le co-polyester comporte au moins trois monomères parmi les diacides carboxyliques et les diols cités ci-dessus.

## Revendications

1. Utilisation, pour le conditionnement d'un liquide alimentaire dans une poche souple d'une feuille souple ne comportant pas en son coeur un adhésif permanent et comportant, suivant sa surface tournée vers l'intérieur de la poche, une couche d'un co-polyester, cette couche de co-polyester étant utilisée afin de préserver le liquide alimentaire d'une dégradation de ses qualités gustatives ou olfactives.

2. Utilisation selon la revendication 1, **caractérisée en ce que** la poche est fabriquée par thermosoudage de la ou chaque feuille souple.

3. Utilisation selon l'une quelconque des revendications précédentes, **caractérisée en ce que** le co-polyester est essentiellement amorphe.

4. Utilisation selon l'une quelconque des revendications précédentes, **caractérisée en ce que** le co-polyester est thermosoudable à une température inférieure à 120°C.

5. Utilisation selon l'une quelconque des revendications précédentes, **caractérisée en ce que** le co-polyester est un polyester obtenu à partir d'acide terephtalique et d'un mélange d'éthylène glycole et du 1,4-cyclohexanedimethanol, la quantité en mole d'éthylène glycole étant supérieure à la quantité en mole du 1,4-cyclo-hexanedimethanol.

6. Utilisation selon l'une quelconque des revendications 1 à 4, **caractérisée en ce que** le co-polyester est un polyester obtenu à partir d'acide terephtalique et d'un mélange du 1,4-cyclohexanedimethanol et d'éthylène glycole, la quantité en mole du 1,4-cyclohexanedimethanol étant supérieure à la quantité en mole de l'éthyléne glycole.

7. Utilisation selon l'une quelconque des revendications 1 à 4, **caractérisée en ce que** le co-polyester est un polyester obtenu à partir d'au moins un monomère de diacide carboxylique choisi parmi :
- acide téréphtalique
- acide isophtalique
- acide naphtalènedicarboxylique ; et
- acide cyclohexanedicarboxylique,
et au moins un monomère de diol choisi parmi :
- éthylène glycole
- diéthylène glycole
- cyclohexanedimathanol
- diméthyle propanediol
- butylène glycole ; et
- polyéthylène glycole.

8. Utilisation selon la revendication 7, **caractérisée en ce que** le copolyester comporte au moins trois monomères choisis parmi lesdits monomères de diacide carboxylique et lesdits monomères de diol.

9. Utilisation selon l'une quelconque des revendications précédentes, **caractérisée en ce que** ladite feuille souple est constituée uniquement de co-polyester.

10. Utilisation selon l'une quelconque des revendications 1 à 8, **caractérisée en ce que** ladite feuille souple comporte une couche support de polymère (30) et une couche de co-polyester, les deux couches étant contrecollées.

11. Utilisation d'emballage selon la revendication 7 à 9, **caractérisée en ce que** ladite couche de co-polyester a une épaisseur comprise entre 15 µm et 70 µm.

12. Utilisation selon l'une quelconque des revendications 1 à 8, **caractérisée en ce que** ladite feuille souple est co-extrudée et comporte une couche support de polymère et au moins une couche externe de co-polyester.

13. Utilisation d'emballage selon la revendication 12, **caractérisée en ce que** ladite couche de co-polyester a une épaisseur comprise entre 5 µm et 40 µm.

14. Utilisation d'emballage selon l'une quelconque des revendications précédentes, **caractérisée en ce qu'**elle comporte un goulot (18) rapporté obturé par un bouchon amovible (20).

## Claims

1. The use, for the packaging of a food liquid in a flexible pouch, of a flexible sheet not comprising within it any permanent adhesive, and comprising, along its surface facing the inside of the pouch, a copolyester layer, this copolyester layer being used to preserve the feed liquid from any deterioration of its gustatory or olfactory qualities.

2. The use according to Claim 1, **characterised in that** the pouch is produced by heat sealing the or each flexible sheet.

3. The use according to any of the preceding claims, **characterised in that** the copolyester is essentially amorphous.

4. The use according to any of the preceding claims, **characterised in that** the copolyester is heat-sealable at any temperature less then 120°C.

5. The use according to any of the preceding claims, **characterised in that** the copolyester is a polyester obtained from terephthalic acid and an ethylene glycol mixture and 1,4-cyclohexanedimethanol, the molar quantity of ethylene glycol being greater than the molar quantity of 1,4-cyclohexanedimethanol.

6. The use according to any of Claims 1 to 4, **characterised in that** the copolyester is a polyester obtained from terephthalic acid and a mixture of 1,4-cyclohexanedimethanol and ethylene glycol, the molar quantity of 1,4-cyclohexanedimethanol being greater than the molar quantity of ethylene glycol.

7. The use according to any of Claims 1 to 4, **characterised in that** the copolyester is a polyester obtained from at least one carboxylic diacid monomer chosen from:
- terephthalic acid
- isophthalic acid
- naphthalenedicarboxylic acid; and
- cyclohexanedicarboxlyic acid,
and at least one diol monomer chosen from:
- ethylene glycol
- diethylene glycol
- cyclohexanedimethanol
- propanediol dimethyl
- butylene glycol; and
- polyethylene glycol.

8. The use according to Claim 7, **characterised in that** the copolyester comprises at least three monomers chosen from said carboxylic diacid monomers and said diol monomers.

9. The use according to any of the preceding claims, **characterised in that** said flexible sheet is made purely of copolyester.

10. The use according to any of Claims 1 to 8, **characterised in that** said flexible sheet comprises a polymer support layer (30) and a copolyester layer, the two layers being pasted.

11. The use of packaging according to Claims 7 to 9, **characterised in that** said copolyester layer has a thickness of between 15 µm and 70 µm.

12. The use according to any of Claims 1 to 8, **characterised in that** said flexible sheet is co-extruded and comprises a polymer support layer and at least one outer copolyester layer.

13. The use of packaging according to Claim 12, **characterised in that** said copolyester layer has a thickness of between 5 µm and 40 µm.

14. The use of packaging according to any of the preceding claims, **characterised in that** it comprises a neck (18) sealed by a removable plug (20).

## Patentansprüche

1. Verwendung, zum Verpacken eines flüssigen Lebensmittelprodukts in einem flexiblen Beutel, einer flexiblen Folie, die in ihrem Innern keinen permanenten Klebstoff aufweist und die entlang der nach innen gekehrten Beuteloberfläche eine Copolyesterschicht trägt, wobei diese Copolyesterschicht dazu dient, das flüssige Lebensmittelprodukt gegen eine Minderung seiner Geschmacks- oder Geruchsqualitäten zu konservieren.

2. Verwendung nach Anspruch 1, **dadurch gekennzeichnet, dass** der Beutel durch Heißsiegeln der oder jeder flexiblen Folie hergestellt wird.

3. Verwendung nach einem der vorherigen Ansprüche, **dadurch gekennzeichnet, dass** der Copolyester im Wesentlichen amorph ist.

4. Verwendung nach einem der vorherigen Ansprüche, **dadurch gekennzeichnet, dass** der Copolyester bei einer Temperatur unter 120°C heißsiegelbar ist.

5. Verwendung nach einem der vorherigen Ansprüche, **dadurch gekennzeichnet, dass** der Copolyester ein Polyester ist, der von Terephthalsäure und einem Gemisch aus Ethylenglykol und 1,4-Cyclohexandimethanol erhalten wurde, wobei die Ethylenglykolmenge in Mol größer ist als die Menge des 1,4-Cyclohexandimethanol in Mol.

6. Verwendung nach einem der Ansprüche 1 bis 4, **dadurch gekennzeichnet, dass** der Copolyester ein Polyester ist, der von Terephthalsäure und einem Gemisch aus 1,4-Cyclohexandimethanol und Ethylenglykol erhalten wurde, wobei die Menge an 1,4-Cyclohexandimethanol in Mol größer ist als die Ethylenglykolmenge in Mol.

7. Verwendung nach einem der Ansprüche 1 bis 4, **dadurch gekennzeichnet, dass** der Copolyester ein Polyester ist, der von wenigstens einem Monomer von zweiwertiger Carbonsäure erhalten wurde, das ausgewählt ist aus:
- Terephthalsäure
- Isophthalsäure
- Naphthalendicarbonsäure; und
- Cyclohexandicarbonsäure,
und wenigstens einem Diolmonomer, das ausgewählt ist aus:
- Ethylenglykol
- Diethylenglykol
- Cyclohexandimethanol
- Dimethylpropandiol
- Butylenglykol; und
- Polyethylenglykol.

8. Verwendung nach Anspruch 7, **dadurch gekennzeichnet, dass** der Copolyester wenigstens drei Monomere umfasst, die ausgewählt sind aus den genannten Monomeren von zweiwertiger Carbonsäure und den genannten Diolmonomeren.

9. Verwendung nach einem der vorherigen Ansprüche, **dadurch gekennzeichnet, dass** die genannte flexible Folie nur aus Copolyester gebildet ist.

10. Verwendung nach einem der Ansprüche 1 bis 8, **dadurch gekennzeichnet, dass** die genannte flexible Folie eine Trägerschicht aus Polymer (30) und eine Schicht aus Copolyester umfasst, wobei die beiden Schichten zusammengeklebt sind.

11. Verwendung einer Verpackung nach einem der Ansprüche 7 bis 9, **dadurch gekennzeichnet, dass** die genannte Schicht aus Copolyester eine Dicke zwischen 15 µm und 70 µm hat.

12. Verwendung nach einem der Ansprüche 1 bis 8, **dadurch gekennzeichnet, dass** die genannte flexible Folie coextrudiert ist und eine Trägerschicht aus Polymer und wenigstens eine Außenschicht aus Copolyester umfasst.

13. Verwendung einer Verpackung nach einem Anspruch 12, **dadurch gekennzeichnet, dass** die genannte Schicht aus Copolyester eine Dicke zwischen 5 µm und 40 µm hat.

14. Verwendung einer Verpackung nach einem der vorherigen Ansprüche, **dadurch gekennzeichnet, dass** sie einen angebrachten Hals (18) umfasst, der durch einen abnehmbaren Stopfen (20) verschlossen ist.
